# EUROPÄISCHE PATENTSCHRIFT

(11) **EP 0 901 567 B1**
(45) Veröffentlichungstag und Bekanntmachung des Hinweises auf die Patenterteilung: **22.12.1999**
(21) Anmeldenummer: 97925955.3
(22) Anmeldetag: 27.05.1997
(51) Int. Cl.: F02B 51/00, F02M 25/00

(54) **VORRICHTUNG ZUM EINFÜHREN EINER GERINGEN MENGE SELTENER ERDEN, INSBESONDERE Cer, IN DIE BRENNKAMMER EINER BRENNKRAFTMASCHINE**
DEVICE FOR INTRODUCING A SMALL AMOUNT OF NOBLE EARTHS, IN PARTICULAR CERIUM, INTO AN INTERNAL COMBUSTION ENGINE COMBUSTION CHAMBER
DISPOSITIF POUR INTRODUIRE UNE QUANTITE REDUITE DE TERRES RARES, NOTAMMENT DE CERIUM, DANS LA CHAMBRE DE COMBUSTION D'UN MOTEUR A COMBUSTION INTERNE

(30) Priorität: 31.05.1996 DE 29609690 U
(43) Veröffentlichungstag der Anmeldung: 17.03.1999
(73) Patentinhaber: Markou, Miltiathis, GR-55201 Panorama Thessaloniki (GR)
(72) Erfinder: Markou, Miltiathis, GR-55201 Panorama Thessaloniki (GR)
(74) Vertreter: Liesegang, Roland, Dr.-Ing.
(86) Internationale Anmeldenummer: EP9702746
(87) Internationale Veröffentlichungsnummer: WO9746798

(56) Entgegenhaltungen:
- WO-A-91/19896
- DE-A- 2 932 603
- DE-C- 4 018 797

## Beschreibung

Die Erfindung betrifft eine Vorrichtung zum Einführen einer geringen Menge seltener Erden insbesondere Cer, in die Brennkammer einer Brennkraftmaschine, wobei ein Behälter, welcher eine trockene, luftdurchlässige Füllung in Form von Fasern und/oder Pulver mit oder aus den seltenen Erden enthält, über mindestens eine Öffnung mit der Atmosphäre und über einen Auslaß mit einer Saugleitung zur Brennkammer der Maschine kommuniziert, so daß der Förderstrom der durch den Behälter strömenden Saugluft Seltenerd-Partikel aus der Füllung aufnimmt, und ein in die Füllung eintauchendes und mit der Öffnung kommunizierendes Rohr zum Einleiten der Saugluft in die Füllung über ein Filter vorgesehen ist.

Eine derartige Vorrichtung ist aus EP 485 551 B1 bekannt. Eine solche Vorrichtung ermöglicht das Beimischen einer kleinen Menge einer Seltenerd-Mischung in trockenem Zustand in den Lufteinlaß der Brennkraftmaschine bei kleinem Installations- und Wartungsaufwand. Eine Erneuerung der Füllung aus der Seltenerd-Mischung ist erst nach hoher Laufleistung eines mit der Brennkraftmaschine ausgerüsteten Kraftfahrzeuges, z.B. nach 80.000 km erforderlich. Durch das Einführen der sehr kleinen Menge an seltener Erde werden gefährliche Schadstoffe, insbesondere CO, CO₂, HC und NOₓ reduziert, und der Kraftstoffverbrauch wird reduziert, so daß eine der Wirkung eines geregelten Katalysators vergleichbare Wirkung mit wesentlich geringerem Aufwand erzielt wird.

Der Erfindung liegt die Aufgabe zugrunde, eine Vorrichtung der genannten Art zu schaffen, die bei einfachem und wartungsfreundlichem Aufbau die Saugluft sehr gleichmäßig über die Füllung verteilt und dabei das Einmischen von in der Saugluft enthaltenen Fremdstoffen (Staub, Feuchtigkeit) verhindert.

Diese Aufgabe ist durch Patentanspruch 1 gelöst.

Eine vorteilhafte Ausführung der Erfindung zeichnet sich dadurch aus, daß das Rohr an seinem freien Ende geschlossen ist, daß die Strömungsverbindung von mindestens einer Querbohrung nahe dem geschlossenen freien Ende des Rohres gebildet ist und daß ein Dichtring zwischen der Rohraußenseite und der Filterinnenseite abdichtend an einer Stelle zwischen der Querbohrung und dem geschlossenen freien Ende des Rohres eingebaut ist. Der Dichtring, der vorzugsweise als üblicher O-Ring ausgeführt sein kann, hat zwei Funktionen. Einerseits dichtet er den ringspaltförmigen Raum zwischen dem zylinderförmigen Filter und der Außenseite des Rohres ab, so daß die über das Rohr zugeführte Saugluft ausschließlich durch das Filter in die Füllung gelangen kann. Andererseits verhindert der Dichtring durch Reibschluß, daß das zylinderförmige Filter von dem Rohr abrutschen kann.

Gemäß einer weiteren Ausgestaltung der Erfindung ist der Raum zwischen der Außenseite des Rohres und dem Filterinneren durch Längsnuten in der Außenwand des Rohres vergrößert, über welche die aus der Querbohrung in den Raum gelangende Saugluft gleichmäßig über Länge und Umfang des rohrförmigen Filters verteilt wird und somit schnell in alle Bereiche der zur Verfügung stehenden Filterfläche gelangen kann. Dies verbessert die Verteilung der Saugluft in der Füllung.

Eine weitere vorteilhafte Weiterbildung der Erfindung besteht darin, daß der Lufteinlaßabschnitt eine Haube mit Lufteinlaßöffnungen aufweist, und daß innerhalb der Haube eine Glocke sitzt, deren Außenseite mit der Haube einen Fangraum für in der Saugluft enthaltene Feuchtigkeit und Schmutzpartikel bildet, wobei zwischen der Glockenöffnung und dem aufstromseitigen, offenen Ende des Rohres ein Einlaßfilter angeordnet ist, und wobei die Glocke über eine weitere, nach oben versetzt zu den Lufteinlaßöffnungen angeordnete Öffnung mit dem Fangraum kommuniziert. Hierdurch wird schon vor Eintritt der Saugluft in das Rohr eine erste Filterwirkung zum Vermeiden des Eintritts von Feuchtigkeit und Schmutzpartikeln in das Rohr erzielt.

Für die Wartung, insbesondere das Wiederauffüllen des Behälters nach einer längeren Laufleistung, z.B. 80.000 km, eines mit der Brennkraftmaschine ausgerüsteten Kraftfahrzeuges ist eine Ausführung der Erfindung vorteilhaft, bei der das aufstromseitige Ende des Rohres in einem Deckelteil befestigt ist, welches den Lufteinlaßabschnitt mit der Haube enthält, und daß das Deckelteil dicht, jedoch lösbar, z.B. durch Verschrauben, mit einem Hauptkörper verbunden ist, welcher die Füllung zumindest teilweise enthält. Zum Wiederauffüllen ist also lediglich dieser Hauptkörper abzuschrauben, aufzufüllen und wieder mit dem Deckelteil zu verschrauben.

Die Erfindung ist im folgenden anhand schematischer Zeichnungen an einem Ausführungsbeispiel mit weiteren Einzelheiten näher erläutert. Es zeigen:
- Fig. 1: eine perspektivische Ansicht einer Vorrichtung nach der Erfindung schräg von oben;
- Fig. 2: einen Vertikalschnitt durch die Vorrichtung nach Fig. 1;
- Fig. 3: einen Schnitt nach der Linie III-III in Fig. 2; und
- Fig. 4: eine perspektivische Ansicht schräg von unten eines Hauptkörpers der Vorrichtung nach den Fig. 1 und 2.

Die gezeigte Vorrichtung weist einen Behälter mit einem Deckelteil 2 und einem topfförmigen Hauptkörper 4 zur Aufnahme einer trockenen Füllung 50 aus Seltenerdpulver oder -fasern auf, die über ein Gewinde 6 verschraubt sind. Eine Dichtung 8 sorgt dabei für einen gasdichten Abschluß des Innenraumes des Behälters gegenüber der äußeren Umgebung. Eine Befestigungsklammer 10 ermöglicht ein Befestigen des Behälters an einer nicht gezeigten Halterung im Motorraum eines ebenfalls nicht gezeigten Kraftfahrzeuges.

Das Deckelteil 2 hat einen insgesamt mit der Bezugszahl 12 bezeichneten Lufteinlaßabschnitt. Dieser Lufteinlaßabschnitt hat an seiner Oberseite eine mit Innengewinde 14 versehene Ausnehmung, in die eine mit passendem Außengewinde versehene Haube 16 eingeschraubt und über einen O-Ring 18 abgedichtet ist. Die Haube hat zwei miteinander fluchtende Lufteinlaßbohrungen 20. Im Inneren der Haube 16 ist eine Glocke 22 aufgenommen, welche über die Haube mittels eines nicht bezeichneten Flansches an einen Absatz des Lufteinlaßabschnittes 12 angedrückt ist. Die untere Glockenöffnung der Glocke 22 weist zu einer zentralen Bohrung 13 des Lufteinlaßabschnittes 12 und ist davon durch ein Einlaßfiltersieb 15 getrennt. Ein O-Ring 18 ist unterhalb dieses Filtersiebes von einem nicht bezeichneten, die Glockenöffnung umgebenden Flansch der Glocke 22 an einen ebenfalls nicht bezeichneten Absatz des Lufteinlaßabschnittes 12 mittels einer unteren Stirnfläche der Haube 16 angedrückt.

Die Glocke 22 hat an ihrem oberen, schmäleren Ende ebenfalls eine Öffnung 24, die in Verbindung mit dem Innenraum der Haube 16 steht. Dieser Innenraum bildet in seinem unteren Bereich zwischen der Glockenaußenwand und der Innenwand der Haube einen Fangraum 26 für Feuchtigkeit und Staub der über die Bohrungen 20 in die Haube eindringenden Luft. Durch den Höhenversatz der Bohrungen 20 und der Öffnung 24 wird der Strom der über die Bohrung 20 eindringenden Saugluft verwirbelt und nach oben zur Öffnung 24 der Glocke umgelenkt, so daß die vom Luftstrom mitgeführten Staubteilchen sowie in der Luft enthaltene Tröpfchen sich im Fangraum 26 sammeln, also nicht in die Öffnung 24 der Glocke 22 hineintransportiert werden.

Das untere Ende der Bohrung 13 des Lufteinlaßabschnittes 12 ist zur Bildung eines Absatzes verengt, an dem über einen O-Ring 28 der Kopf einer Einlaßdüse 30 mit Düsenmund 32 anliegt. Die Einlaßdüse 30 ist mit dem verjüngten oberen Ende eines Rohrs 34 verschraubt, das mit seinem Hohlraum 36 mit der Bohrung 13 des Lufteinlaßabschnittes 12 fluchtet und diese bis zu einem geschlossenen unteren Ende 38 des Rohres 34 fortsetzt.

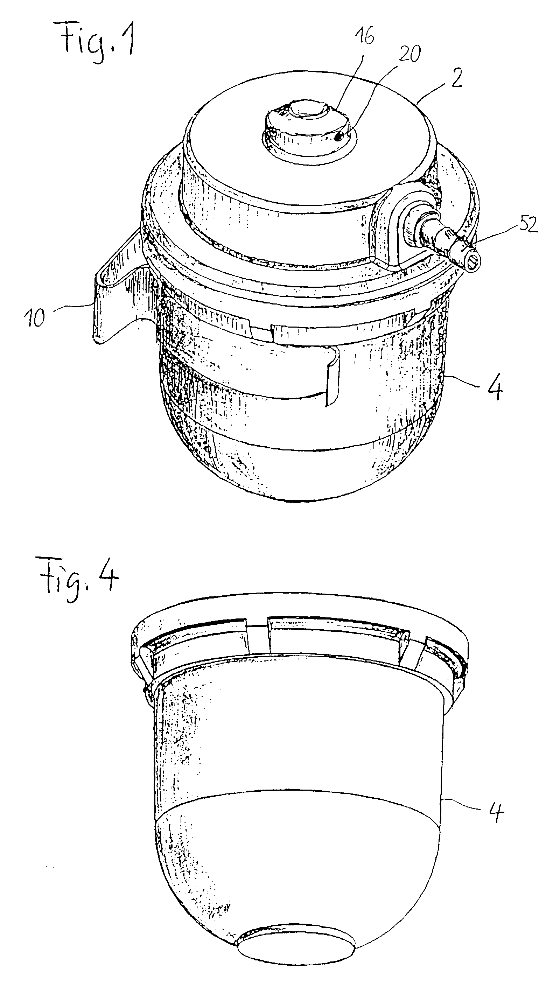

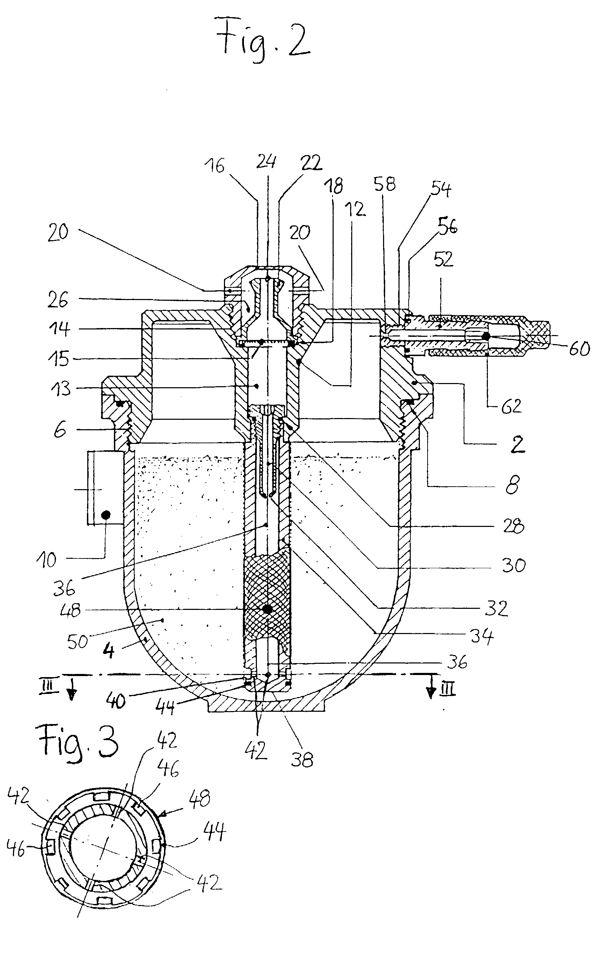

Das Rohr 34 hat unmittelbar oberhalb seines unteren Endes 38 eine Ringnut 40. In diese Ringnut münden sich unter 90° kreuzende Querbohrungen 42, welche somit den Hohlraum 36 des Rohres 34 mit dessen Außenseite verbinden. Unterhalb der Ringnut 40 ist das Rohr 34 von einem O-Ring 44 umgeben, der in einer schmäleren Ringnut sitzt. Aus Fig. 3 ist zusätzlich ersichtlich, daß das Rohr mehrere sich über seine Länge erstreckende Längsnuten 46, im gezeigten Beispiel acht Längsnuten, aufweist, welche zur Verteilung der über die Querbohrungen 42 und die Ringnut 40 von innen nach außen strömender Saugluft über die Länge des Rohres 34 dient. Diese Längsnuten enden oberhalb des O-Ringes 44. Über das Rohr 34 ist ein Filter in Gestalt eines Metallsiebes 50 einer Maschenweite mesh 80 (80 Maschenöffnungen je Quadratzoll) aufgeschoben, und zwar über die ganze Länge des Rohres, so daß es oben an das untere Ende des Lufteinlaßabschnittes 12 anstößt und unten reibschlüssig von dem O-Ring 44 gehalten und abgedichtet ist. Somit ist sichergestellt, daß über die untere Ringnut 40 austretende Saugluft sich in dem Raum zwischen Außenumfang des Rohres 34 und der Innenwand des Metallsiebes 48 gebildet ist, schnell und gleichmäßig verteilt und nur über das Filtersieb 48 nach außen in die Füllung 50 aus Seltenerdpulver- oder fasern gelangen kann. Dies gewährleistet ein gleichmäßiges Durchlüften der Füllung 50.

Die Außenwand des Deckels 2 ist von einem Auslaß 52 durchsetzt, der über ein Gewinde 54 in die Wand des Deckelteiles 2 mittels O-Ring 56 dicht eingeschraubt ist. Im Bereich dieser Einschraubung ist eine Drossel 58 vorgesehen. Der Auslaß, dessen Öffnung 60 mit einer nicht gezeigten Ansaugleitung zur Brennkammer einer Brennkraftmaschine verbunden ist, ist mittels einer Elastomerkappe 62 zum Transport abgedeckt.

Im Betrieb wird ein mit Seltenerdpartikeln angereicherter Luftstrom über den Auslaß und die Saugleitung in die Brennkammer der Brennkraftmaschine aufgrund des dort in der Ansaugphase herrschenden Unterdrucks gesaugt.

Die beiden folgenden Gesichtspunkte sind für die Auswahl der bei der Erfindung zu verwendenden Füllung 50 maßgeblich:
1. die Partikelgröße des Seltenerd-Materials bewegt sich zwischen 0,25 mm (60 mesh) und 0.5 Mikron, wobei die Größe von 0,048 mm (300 mesh) eine bevorzugte Größe darstellt.
2. Ganz allgemein versteht sich, daß die verwendeten Verbindungen einen so hohen Anteil Cer (CeO₂) enthalten sollten, wie leicht und wirtschaftlich erreicht werden kann, wobei dies selbstverständlich von den praktischen Schwierigkeiten abhängt, die mit der Abtrennung der verschiedenen Seltenerdoxide zusammenhängen.

Der gewichtsanteilige Cer-Gehalt in der Mischung variiert von 30% bis zu praktisch 100%. In der folgenden Beschreibung werden drei Beispiele für bevorzugte Verbindungen angegeben.

Die nachfolgende Analyse gibt die gewichtsmäßigen Zusammensetzungen dreier Beispiele für bevorzugte Mischungen wieder, die als Füllung 50 bei der Erfindung verwendet werden können.

| Zusammensetzung 1 | |
|---|---|
| Ceroxid | 45.0 % |
| Lanthanoxid | 22.5 % |
| Neodymoxid | 17.9 % |
| Präsodynoxid | 5.7 % |
| Thoriumoxid | 0,25 % |
| Sulfat als SO₂ | 1.5 % |
| andere Oxide (YO₂₃,ScO₃) | 2.9 % |
| Phosphat als PO₃ | 0.8 % |
| Kalk und Magnesiumoxid | 1.0 % |

| Zusammensetzung 2 | |
|---|---|
| Ceroxid | 90.0 % |
| Lanthanoxid | 2.0 % |
| Neodymoxid | 1.3 % |
| Präsodynoxid | 0.4 % |
| andere Seltenerdoxide | 1.0 % |
| Thoriumoxid | 0.25 % |
| Eisen- und Aluminiumoxid | 0.25 % |
| Kalk und Magnesiumoxid | 4.0 % |
| Siliziumdioxid | 0.05 % |
| Phosphat | 0.5 % |
| Sulfat | 0.5 % |

| Zusammensetzung 3 | |
|---|---|
| Ceroxid | 45.6 % |
| Lanthanoxid | 22.8 % |
| Neodymoxid | 16.2 % |
| Präsodynoxid | 4.7 % |
| andere Seltenerdoxide | 5.7 % |
| Thoriumoxid | 0.2 % |
| Eisen- und Aluminiumoxid | 1.0 % |
| Kalk und Magnesiumoxid | 0.2 % |
| Siliziumdioxid | 0.1 % |
| Phosphat | 0.5 % |
| Sulfat | 1-2.0 % |
| Zündungsverlust | 0-1.0 % |

## Patentansprüche

1. Vorrichtung zum Einführen einer geringen Menge seltener Erden, insbesondere Cer, in die Brennkammer einer Brennkraftmaschine, wobei ein Behälter (2, 4), welcher eine trockene, luftdurchlässige Füllung (50) in Form von Fasern und/oder Pulver mit oder aus den seltenen Erden enthält, über mindestens eine Öffnung (20) mit der Atmosphäre und über einen Auslaß (52) mit einer Saugleitung zur Brennkammer der Maschine kommuniziert und wobei ein in die Füllung (50) eintauchendes und mit der Öffnung (20) kommunizierendes Rohr (34) zum Einleiten von Saugluft in die Füllung über ein Filter (48) vorgesehen ist, wobei das Rohr (34) auf seiner Außenseite über mindestens ein Teilstück seiner Länge von dem zylinderförmigen Filter (48) umgeben ist, mindestens eine Strömungsverbindung (42) durch die Rohrwand zwischen dem Rohrinneren (36) und dem Raum zwischen der Außenseite des Rohres (34) und dem Filter (48) vorgesehen ist und dieser Raum derart abgedichtet ist, daß die Saugluft ausschließlich über das Filter (48) in die Füllung (50) gelangen kann.

2. Vorrichtung nach Anspruch 1, dadurch **gekennzeichnet,** daß das Rohr (34) an seinem freien Ende (38) geschlossen ist, daß die Strömungsverbindung von mindestens einer Querbohrung (42) nahe dem geschlossenen freien Ende (38) des Rohres gebildet ist und daß ein Dichtring (44) zwischen der Rohraußenseite und der Filterinnenseite abdichtend an einer Stelle zwischen der Querbohrung (42) und dem geschlossenen freien Ende (38) des Rohres eingebaut ist.

3. Vorrichtung nach Anspruch 1 oder 2, dadurch **gekennzeichnet,** daß der Raum zwischen der Außenseite des Rohres (34) und dem Filter (48) Längsnuten (46) in der Außenwand des Rohres zur gleichmäßigen Verteilung der über die Querbohrung (42) in den Raum gelangenden Saugluft über Länge und Umfang des zylinderförmigen Filters umfaßt.

4. Vorrichtung nach einem der Ansprüche 1 bis 3, dadurch **gekennzeichnet,** daß in das aufstromseitige Ende des Rohres (34) eine Einlaßdüse (30) für die Saugluft eingesetzt ist.

5. Vorrichtung nach einem der Ansprüche 1 bis 4, dadurch **gekennzeichnet,** daß das aufstromseitige Ende des Rohres in einem Deckelteil (2) des Behälters umfassend einen Lufteinlaßabschnitt (12) befestigt ist.

6. Vorrichtung nach Anspruch 5, dadurch **gekennzeichnet,** daß der Lufteinlaßabschnitt (12) eine Haube (16) mit Lufteinlaßöffnungen (20) aufweist, daß innerhalb der Haube eine Glocke (22) sitzt, deren Außenseite mit der Haube einen Fangraum (26) für in der Saugluft enthaltene Feuchtigkeit und Schmutzpartikel bildet, und daß die Glocke (22) über eine weitere, nach oben versetzt zu den Lufteinlaßöffnungen (20) angeordnete Öffnung (24) mit dem Fangraum (26) kommuniziert.

7. Vorrichtung nach Anspruch 6, dadurch **gekennzeichnet,** daß zwischen der Glockenöffnung und dem aufstromseitigen, offenen Ende des Rohres (34) ein Einlaßfilter (15) angeordnet ist.

8. Vorrichtung nach Anspruch 5, 6 oder 7, dadurch **gekennzeichnet,** daß das Rohr (34) vertikal in den Behälter (2, 4) eintauchend mit dem freien Ende (38) nächst der tiefsten Stelle des Behälters angeordnet ist.

9. Vorrichtung nach einem der Ansprüche 5 bis 8, dadurch **gekennzeichnet,** daß das Deckelteil (2) gasdicht, jedoch lösbar mit einem Hauptkörper (4) verbunden ist, welcher die Füllung (50) zumindest teilweise enthält.

10. Vorrichtung nach einem der Ansprüche 1 bis 9, dadurch**gekennzeichnet,** daß das Filter (48) ein Sieb aus einem Drahtgewebe mit einer Maschenweite von vorzugsweise mesh 80 ist.

## Claims

1. Device for introducing a small amount of rare earths, in particular Cer, into the combustion chamber of an internal combustion engine, wherein a container (2, 4) which contains a dry, air-permeable filling (50) in the form of fibers and/or powder comprising or consisting of the rare earths communicates via at least one opening (20) with the atmosphere and via an outlet (52) with a suction line to the combustion chamber of the engine, and wherein a tube (34) submerged into the filling (50) and communicating with the opening (20) is provided for introducing suction air into the filling via a filter (48), wherein the outer side of the tube (34) is encompassed by a cylindrical filter (48) at least over a portion of its length at least one flow communication (42) is provided through the tubular wall between interior of the tube (36) and the space between the outer side of the tube (34) and the filter (48), and that this space is sealed so that the suction air reaches the filling (50) exclusively via the filter (48).

2. Device according to claim 1, characterized in that the tube (34) is closed at its free end (38), that the flow communication is formed by at least one transverse bore (42) close to the closed free end (38) of the tube, and that a sealing ring (44) is mounted between the outer side of the tube and the inner side of the filter in a sealing manner at a location between the transverse bore (42) and the closed free end (38) of the tube.

3. Device according to claim 1 or 2, characterized in that the space between the outer side of the tube (34) and the filter (48) comprises longitudinal grooves (46) in the outer wall of the tube extending over the length and periphery of the cylindrical filter for regularly distributing the suction air intruding into the space via the transverse bore (42).

4. Device according to one of claims 1 to 3, characterized in that an inlet nozzle (30) for the suction air is inserted into the upstream end of the tube (34).

5. Device according to one of claims 1 to 4, characterized in that the upstream end of the tube is fixed in a cover member (2) of the container comprising an air inlet section (12).

6. Device according to claim 5, characterized in that the air inlet section (12) comprises a hood (16) with air inlet openings (20), that a bell is seated within the hood, the outer side of which forming together with the hood a space (26) accomodating for moisture and dust particles contained in the suction air, and that the bell (22) communicates with the reservoir (26) via a further opening (24) arranged offset towards the top with respect to the air inlet openings (20).

7. Device according to claim 6, characterized in that an inlet filter (15) is arranged between the bell opening and the upstream-sided, open end of the tube (34).

8. Device according to claim 5, 6 or 7, characterized in that the tube (34) is arranged vertically submerged into the container (2, 4) with the free end (38) adjacent the deepest point of the container.

9. Device according to one of claims 5 to 8, characterized in that the cover member (2) is connected in a gastight but releasable manner with a main body (4) which at least partially contains the filling (50).

10. Device according to one of claims 1 to 9, characterized in that the filter (48) is a sieve made of a wire tissue having a mesh width of preferably mesh (80).

## Revendications

1. Dispositif destiné à introduire une faible quantité de terres rares, notamment du cérium, dans la chambre de combustion d'un moteur à combustion interne, un récipient (2, 4), qui renferme un remplissage (50) sous forme de fibres et/ou de poudre avec les terres rares ou en celles-ci, communique, par au moins une ouverture (20), avec l'atmosphère, et par l'intermédiaire d'une sortie (52), avec une conduite d'admission vers la chambre de combustion du moteur, et un tube (34), qui plonge dans le remplissage (50) et communique avec l'ouverture (20), étant prévu pour l'introduction d'air d'admission dans le remplissage (50) par l'intermédiaire d'un filtre (48), le tube (34) étant entouré sur son côté extérieur, le long d'au moins une partie de sa longueur, par le filtre (48) de forme cylindrique, au moins une liaison d'écoulement (42) étant prévue au travers de la paroi du tube, entre l'intérieur du tube (36) et l'espace entre le côté extérieur du tube (34) et le filtre (48), cet espace étant rendu étanche de façon telle que l'air d'admission puisse parvenir exclusivement par l'intermédiaire du filtre (48) dans le remplissage (50).

2. Dispositif selon la revendication 1, **caractérisé** en ce que le tube (34) est fermé à son extrémité libre (38), en ce que la liaison d'écoulement est formée par au moins un perçage transversal (42) à proximité de l'extrémité libre (38) du tube, et en ce qu'un anneau d'étanchéité (44) est monté de manière étanche, entre le côté extérieur du tube et le côté intérieur du filtre, à un endroit situé entre le perçage transversal (42) et l'extrémité libre (38), fermée, du tube.

3. Dispositif selon la revendication 1 ou 2, **caractérisé** en ce que l'espace entre le côté extérieur du tube (34) et le filtre (48) comprend des rainures longitudinales (46) dans la paroi extérieure du tube, pour la répartition uniforme sur la longueur et la périphérie du filtre de forme cylindrique, de l'air d'admission parvenant dans l'espace par l'intermédiaire du perçage transversal (42).

4. Dispositif selon l'une des revendications 1 à 3, **caractérisé** en ce que dans l'extrémité amont du tube (34) est insérée une buse d'admission (30) pour l'air d'admission.

5. Dispositif selon l'une des revendications 1 à 4, **caractérisé** en ce que l'extrémité amont du tube est fixée dans une partie de couvercle (2) du récipient, comprenant un tronçon d'admission d'air (12).

6. Dispositif selon la revendication 5, **caractérisé** en ce que le tronçon d'admission d'air (12) comporte un chapeau (16) avec des ouvertures d'admission d'air (20), en ce qu'à l'intérieur du chapeau est placée une cloche (22) dont le côté extérieur forme, avec le chapeau, une chambre de captage (26) pour de l'humidité et des particules de salissures contenues dans l'air d'admission, et en ce que la cloche (22) communique avec la chambre de captage (26), par l'intermédiaire d'une autre ouverture (24) disposée de manière décalée vers le haut par rapport aux ouvertures d'admission d'air (20).

7. Dispositif selon la revendication 6, **caractérisé** en ce qu'un filtre d'admission (15) est disposé entre l'ouverture de cloche et l'ouverture amont, ouverte, du tube (34).

8. Dispositif selon la revendication 5, 6 ou 7, **caractérisé** en ce que le tube (34) est disposé de façon à plonger verticalement dans le récipient (2, 4), avec son extrémité libre (38) située au plus près du point le plus profond du récipient.

9. Dispositif selon l'une des revendications 5 à 8, **caractérisé** en ce que la partie de couvercle (2) est reliée de manière étanche aux gaz, mais toutefois démontable, à un corps principal (4), qui renferme au moins partiellement le remplissage (50).

10. Dispositif selon l'une des revendications 1 à 9, **caractérisé** en ce que le filtre (48) est un tamis en un treillis de fil métallique, d'un nombre mesh de préférence de 80 mesh.
